# EUROPÄISCHE PATENTSCHRIFT

(11) **EP 3 230 151 B1**
(45) Veröffentlichungstag und Bekanntmachung des Hinweises auf die Patenterteilung: **22.05.2019**
(21) Anmeldenummer: 15805161.5
(22) Anmeldetag: 03.12.2015
(51) Int. Cl.: B62D 3/04, B62D 3/12, B21K 1/76

(54) **VERFAHREN ZUR HERSTELLUNG EINER LEICHTGEWICHTIGEN LENKZAHNSTANGE UND HIERMIT HERGESTELLTE LENKZAHNSTANGE**
METHOD FOR PRODUCING A LIGHTWEIGHT STEERING GEAR RACK AND STEERING GEAR RACK PRODUCED BY MEANS OF SAID METHOD
PROCÉDÉ DE FABRICATION D'UNE CRÉMAILLÈRE DE DIRECTION ALLÉGÉE ET CRÉMAILLÈRE DE DIRECTION FABRIQUÉE PAR LEDIT PROCÉDÉ

(30) Priorität: 08.12.2014 DE 102014225104
(43) Veröffentlichungstag der Anmeldung: 18.10.2017
(73) Patentinhaber: Volkswagen Aktiengesellschaft, 38440 Wolfsburg (DE)
(72) Erfinder: JENKE, Klaas-Simon, 38106 Braunschweig (DE); HUK, André, 38110 Braunschweig (DE); BLUMBERG, Stefan, 38126 Braunschweig (DE)
(86) Internationale Anmeldenummer: PCT/EP2015/078583
(87) Internationale Veröffentlichungsnummer: WO 2016/091725

(56) Entgegenhaltungen:
- EP-A1- 2 134 586
- DE-A1-102012 011 509
- JP-A- 2004 237 316

## Beschreibung

Die Erfindung betrifft ein Verfahren zur Herstellung einer Lenkzahnstange für ein Kraftfahrzeug, die einen Verzahnungsabschnitt mit einer Lenkverzahnung und einen Spindelabschnitt mit einer Kugelumlaufspindel aufweist.
Die Erfindung betrifft ferner eine Lenkzahnstange für ein Kraftfahrzeug, die einen Verzahnungsabschnitt mit einer Lenkverzahnung und einen Spindelabschnitt mit einer Kugelumlaufspindel aufweist.

Zahnstangenlenkungen für Kraftfahrzeuge sind aus dem Stand der Technik bekannt. Eine Zahnstangenlenkung umfasst eine im Lenkgetriebe verschiebbar gelagerte Lenkzahnstange, die mit einer Lenkverzahnung ausgebildet ist, in die ein mit der Lenksäule oder dergleichen verbundenes Ritzel eingreift. Durch Einleiten einer Hilfskraft in die Lenkzahnstange kann eine Lenkunterstützung erfolgen. Die Hilfskraft kann elektromechanisch, bspw. mittels Elektrostellmotor bzw. Elektroservomotor, erzeugt werden (so genannte elektromechanische Lenkung). Die Einleitung der Hilfskraft in die Lenkzahnstange kann mit Hilfe eines Kugelumlaufgewindetriebes (auch als Kugelgewindetrieb bezeichnet) bewerkstelligt werden, wozu die Lenkzahnstange ferner mit einer gewindeartigen Kugelumlaufspindel (auch als Kugelgewinde bezeichnet) ausgebildet ist. Die Lenkverzahnung und die Kugelumlaufspindel erstrecken sich in verschiedenen Abschnitten, die nachfolgend auch als Verzahnungsabschnitt und als Spindelabschnitt bezeichnet werden.

Zum Stand der Technik wird auf die Patentschrift DE 10 2008 028 768 A1 derselben Anmelderin hingewiesen, in der eine leichtgewichtige Zahnstange betreffender Art beschrieben ist, die sich einfach und kostengünstig fertigen lässt.

Die EP 2 134 586 A1 betrifft eine aus zwei rohrförmigen Teilen bestehende Zahnstange für eine Lenkung, wobei eines der rohrförmigen Teile eine Verzahnung und das andere eine Kugelumlaufspindel aufweist. Die beiden rohrförmigen Teile sind mittels eines separaten, Verbindungszapfen aufweisenden Verbindungsteils miteinander verbunden.

Die JP 2004 237316 A wird als nächstliegender Stand der Technik angesehen, aus ihr ist eine einen Verzahnungsabschnitt und einen Spindelabschnitt mit einer Kugelumlaufspindel aufweisende rohrförmige Zahnstange für eine Lenkung bekannt. Die Kugelumlaufspindel wird durch spanende Bearbeitung am hohlen Spindelabschnitt der rohrförmigen Zahnstange ausgebildet.

Ausgehend hiervon liegt der Erfindung die Aufgabe zugrunde, eine weitere Möglichkeit für die Herstellung und Gestaltung einer leichtgewichtigen Lenkzahnstange betreffender Art anzugeben.

Diese Aufgabe wird gelöst mit einem erfindungsgemäßen Verfahren entsprechend den Merkmalen des Patentanspruchs 1 und mit einer erfindungsgemäßen Lenkzahnstange entsprechend den Merkmalen des nebengeordneten Patentanspruchs. Bevorzugte Weiterbildungen und Ausgestaltungen der Erfindung ergeben sich analog für beide Erfindungsgegenstände sowohl aus den abhängigen Patentansprüchen als auch aus den nachfolgenden Erläuterungen.

Das erfindungsgemäße Verfahren zur Herstellung einer Lenkzahnstange, die einen Verzahnungsabschnitt mit einer Lenkverzahnung und einen Spindelabschnitt mit einer Kugelumlaufspindel (Kugelgewinde) aufweist bzw. aufweisen soll, umfasst zumindest die folgenden Verfahrensschritte:
- Bereitstellen eines stangenartigen Rohlings aus einem massiven Metallmaterial;
- Aushöhlen des Spindelabschnitts (d. h. Aushöhlen des Rohlings bzw. des Werkstücks im entsprechenden Abschnitt) durch einseitiges Tieflochbohren, wobei eine tiefe, den Spindelabschnitt axial durchragende Sacklochbohrung erzeugt wird; und
- Erzeugen der Kugelumlaufspindel am hohlen Spindelabschnitt durch spanende Bearbeitung. Der stangenartige Rohling kann durch Ablängen eines Halbzeugs mit Vollquerschnitt, insbesondere einem Rundquerschnitt (bspw. mit einem Außendurchmesser von 25 mm oder weniger bis 35 mm), erzeugt werden. Bei dem Metallmaterial handelt es sich vorzugsweise um ein Stahlmaterial und insbesondere um ein härtbares Stahlmaterial.

Unter Tieflochbohren wird das Erzeugen einer tiefen Sacklochbohrung verstanden, wobei die axiale Bohrungstiefe wenigstens 200 mm, bevorzugt wenigstens 300 mm, besonders bevorzugt wenigstens 350 mm und insbesondere wenigstens 400 mm betragen kann. Dadurch kann eine Gewichts- bzw. Massereduktion von bis zu mehreren Hundert Gramm erreicht werden (bei einem üblichen Gewicht von mehreren Kilogramm, bspw. 2,5 kg bis 3 kg, wobei es auch leichtere und schwerere Lenkzahnstangen gibt), wobei sich dies auch vorteilig oder zumindest nicht nachteilig auf das Trägheitsmoment auswirkt. Das Tieflochbohren erfolgt von einer Stirnseite her und wird bevorzugt im Zuge einer spanenden Bearbeitung der Stangenenden (d. h. Tieflochbohren beim Endenbearbeiten) ausgeführt. Der Bohrungsdurchmesser kann in etwa der Hälfte des Außendurchmessers des Rohlings entsprechen, wobei besonders bevorzugt vorgesehen ist, dass der Bohrungsdurchmesser dem Gewindekernlochdurchmesser eines stirnseitigen Innengewindes zur Anbindung einer Spurstange (oder dergleichen) entspricht, so dass quasi nur ein Bohrvorgang erforderlich ist. Insbesondere ist vorgesehen, dass die durch einseitiges Tieflochbohren erzeugte tiefe Sacklochbohrung wenigstens den Bereich bzw. Abschnitt durchragt, in dem die Kugelumlaufspindel erzeugt wird.

Die Erfindung sieht demnach eine Kombination aus Tieflochbohren und nachfolgendem Spanen des Kugelgewindes (Kugelgewindespanen) vor. Das Spanen kann z. B. mit bestimmter oder unbestimmter Schneide erfolgen. Durch das Spanen des Kugelgewindes ist es möglich, das Kugelgewinde auf den hohlen Rohling aufzubringen, was bei einer umformenden Herstellung, bspw. Gewindewalzen, nicht möglich ist. Durch geringen Mehraufwand lassen sich, ohne nachteiligen Einfluss auf die Festigkeit, immense Gewichtsreduktionen erzielen. Die Erfindung ist insbesondere auch für in Serienproduktion hergestellte Lenkzahnstangen geeignet.

Vor dem Aushöhlen bzw. vor dem Tieflochbohren kann das Metallmaterial (des Werkstücks) mit gängigen Härteverfahren gehärtet werden. Bevorzugt ist vorgesehen, dass nach dem Tieflochbohren und insbesondere vor dem Kugelgewindespanen ein Härten des Metallmaterials erfolgt. Die Härtung des Metallmaterials kann vollständig oder auch nur bereichsweise erfolgen.

Vor dem Aushöhlen bzw. Tieflochbohren kann im Verzahnungsabschnitt die Lenkverzahnung, insbesondere durch umformende oder spanende Bearbeitung, erzeugt werden. Eine spanende Erzeugung der Lenkverzahnung kann dabei vor oder nach einem eventuellen Härten des Metallmaterials erfolgen. Die Lenkverzahnung kann aber auch erst nach dem Tieflochbohren, insbesondere durch umformende oder spanende Bearbeitung, erzeugt werden. Auch hierbei kann eine spanende Erzeugung der Lenkverzahnung vor oder nach einem eventuellen Härten des Metallmaterials erfolgen. Insbesondere ist vorgesehen, dass eine spanende Erzeugung der Lenkverzahnung im Zuge des Kugelgewindespanens, insbesondere aber nicht gleichzeitig, erfolgt und zwar im ungehärteten bzw. weichen oder auch gehärteten Zustand.

Die erfindungsgemäße Lenkzahnstange weist einen Verzahnungsabschnitt mit einer Lenkverzahnung und einen Spindelabschnitt mit einer Kugelumlaufspindel auf und ist mit einem erfindungsgemäßen Verfahren hergestellt, so dass trotz einer einstückigen Herstellung (aus einem einzelnen Rohling) der Verzahnungsabschnitt massiv und der Spindelabschnitt, zumindest teilweise, hohl ausgebildet ist. Die Kugelumlaufspindel ist spanend bzw. spanabhebend hergestellt und weist somit übliche Eigenschaften einer spanenden Herstellung auf. Bevorzugt ist auch die Lenkverzahnung spanend hergestellt, wobei diese auch umformend hergestellt sein kann und somit übliche Eigenschaften einer spanenden oder umformenden Herstellung aufweist.

Der Spindelabschnitt weist eine sich axial erstreckende tiefe Sacklochbohrung auf, die bevorzugt wenigstens den Bereich bzw. Abschnitt durchragt, in dem sich die Kugelumlaufspindel befindet. Besonders bevorzugt ist vorgesehen, dass die Sacklochbohrung bis zum Verzahnungsabschnitt reicht und insbesondere bis zu der im Verzahnungsabschnitt ausgebildeten Lenkverzahnung heranreicht. Der Bohrungsdurchmesser der Sacklochbohrung kann in Wesentlichen der Hälfte eines (äußeren) Nenndurchmessers der Lenkzahnstange entsprechen und/oder dem Gewindekernlochdurchmesser eines stirnseitigen Innengewindes zur Anbindung einer Spurstange (oder dergleichen) entsprechen. Bevorzugt ist die erfindungsgemäße Lenkzahnstange aus einem Stahlmaterial und insbesondere aus einem gehärteten Stahlmaterial gebildet.

Die Erfindung wird nachfolgend beispielhaft und in nicht einschränkender Weise mit Bezug auf die schematischen Figuren näher erläutert. Die in den Figuren gezeigten und/oder nachfolgend erläuterten Merkmale können, auch unabhängig von konkreten Merkmalskombinationen, die Erfindung weiterbilden.
- Fig. 1: zeigt in einer Teilschnittansicht eine erfindungsgemäße Lenkzahnstange.
- Fig. 2: veranschaulicht ein erfindungsgemäßes Verfahren zur Herstellung der Lenkzahnstange aus Fig. 1.
- Fig. 3: veranschaulicht ein anderes erfindungsgemäßes Verfahren zur Herstellung der Lenkzahnstange aus Fig. 1.

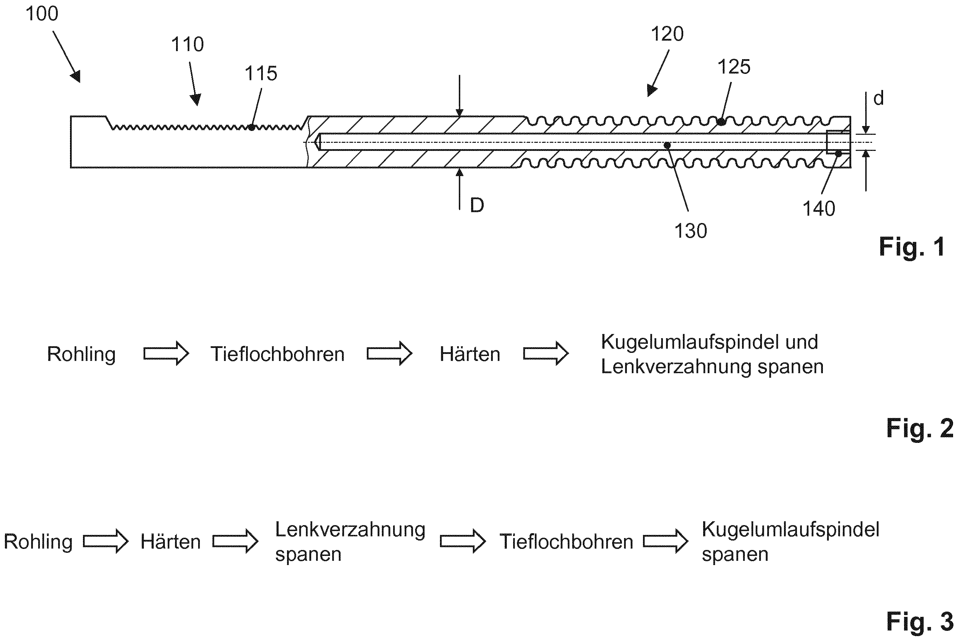

Die in Fig. 1 nicht maßstabsgerecht dargestellte Lenkzahnstange 100 weist einen Verzahnungsabschnitt 110 mit einer Lenkverzahnung 115 und einen Spindelabschnitt 120 mit einer Kugelumlaufspindel (Kugelgewinde) 125 auf. In die Lenkverzahnung 115 greift ein nicht dargestelltes Lenkritzel ein. Durch Drehantrieb des Lenkritzels kann eine Translationsbewegung der Lenkzahnstange 100 in axialer Richtung herbeigeführt werden, die über nicht dargestellte Spurstangen an die zu lenkenden Kraftfahrzeugräder weitergegeben wird. Mit 140 ist ein stirnseitiges Innengewinde zur Anbindung einer Spurstange bezeichnet. Auf der Kugelumlaufspindel 125 läuft eine nicht dargestellte Kugelgewindemutter, mit der zum Zwecke der Lenkunterstützung in bekannter Weise von einem Elektromotor (oder dergleichen) erzeugte Drehbewegungen in Translationsbewegungen der Lenkzahnstange 100 gewandelt werden.

Die aus einem gehärteten Stahlmaterial bestehende Lenkzahnstange 100 ist im Spindelabschnitt 120 bzw. spindelseitig hohl und im Verzahnungsabschnitt 110 massiv ausgebildet. Die hohle Ausbildung des Spindelabschnitts 120 wird durch eine einseitig eingebrachte Tieflochbohrung 130 mit dem Bohrungsdurchmesser d bewerkstelligt, die als tiefe Sacklochbohrung (die axiale Tiefe kann mehrere Hundert Millimeter betragen) ausgeführt ist und die im Wesentlichen bis in den Verzahnungsabschnitt 110 reicht bzw. bis an die Lenkverzahnung 115 heranreicht. Dadurch wird ohne Festigkeitseinbußen eine immense Gewichtsreduktion erreicht.

Fig. 2 veranschaulicht ein erstes erfindungsgemäßes Verfahren zur Herstellung der Lenkzahnstange 100 mit den Schritten (wobei weitere Schritte oder Zwischenschritte vorgesehen sein können):
- Bereitstellen eines stangenartigen Rohlings aus einem massiven Metallmaterial;
- Tieflochbohren zur Aushöhlung des Spindelabschnitts 120;
- Härten; und
- Erzeugen der Kugelumlaufspindel 125 und der Lenkverzahnung 115 durch spanende Bearbeitung (bspw. durch Drehen, Fräsen, Schleifen oder dergleichen).

Die Lenkverzahnung 115 kann auch vor dem Härten erzeugt werden, wobei dann sowohl eine spanende als auch eine umformende Erzeugung möglich ist.

Fig. 3 veranschaulicht ein zweites erfindungsgemäßes Verfahren zur Herstellung der Lenkzahnstange 100 mit den Schritten (wobei weitere Schritte oder Zwischenschritte vorgesehen sein können):
- Bereitstellen eines stangenartigen Rohlings aus einem massiven Metallmaterial;
- Härten;
- Erzeugen der Lenkverzahnung 115 durch spanende Bearbeitung;
- Tieflochbohren zur Aushöhlung des Spindelabschnitts 120; und
- Erzeugen der Kugelumlaufspindel 125 durch spanende Bearbeitung.
Die Lenkverzahnung 115 kann auch vor dem Härten erzeugt werden, wobei dann sowohl eine spanende als auch eine umformende Erzeugung möglich ist. Auch das Tieflochbohren kann zu einem anderen Zeitpunkt bzw. an einer anderen Verfahrensstelle ausgeführt werden, bspw. vor oder nach dem Härten.

Bevorzugt ist vorgesehen, dass der verwendete stangenartige Rohling einen der herzustellenden Lenkzahnstange 100 entsprechenden Querschnitt aufweist, so dass eine Durchmesserreduzierung durch spanende Bearbeitung der Rohlingsumfangsfläche, außer gegebenenfalls im Verzahnungsabschnitt 110 und/oder im Spindelabschnitt 120, nicht notwendigerweise erforderlich ist. Ein äußerer Nenndurchmesser D der Lenkzahnstange 100 kann daher im Wesentlichen mit dem Nenndurchmesser des Rohlings identisch sein.

### Bezugszeichenliste

- 100: Lenkzahnstange
- 110: Verzahnungsabschnitt
- 115: Lenkverzahnung
- 120: Spindelabschnitt
- 125: Kugelumlaufspindel
- 130: Tieflochbohrung, tiefe Sacklochbohrung
- 140: Innengewinde
- D: Nenndurchmesser
- d: Bohrungsdurchmesser

## Patentansprüche

1. Verfahren zur Herstellung einer Lenkzahnstange (100), die einen Verzahnungsabschnitt (110) mit einer Lenkverzahnung (115) und einen Spindelabschnitt (120) mit einer Kugelumlaufspindel (125) aufweist, umfassend:
Bereitstellen eines stangenartigen Rohlings aus einem massiven Metallmaterial;
Aushöhlen des Spindelabschnitts (120) durch einseitiges Tieflochbohren, wobei eine tiefe, den Spindelabschnitt (120) axial durchragende Sacklochbohrung (130) erzeugt wird; und
Erzeugen der Kugelumlaufspindel (125) am hohlen Spindelabschnitt (120) durch spanende Bearbeitung.

2. Verfahren nach Anspruch 1,
**dadurch gekennzeichnet, dass**
nach dem Tieflochbohren ein Härten des Metallmaterials erfolgt.

3. Verfahren nach Anspruch 1,
**dadurch gekennzeichnet, dass**
vor dem Tieflochbohren ein Härten des Metallmaterials erfolgt.

4. Verfahren nach einem der Ansprüche 1 bis 3,
**dadurch gekennzeichnet, dass**
vor dem Tieflochbohren die Lenkverzahnung (115) erzeugt wird.

5. Verfahren nach einem der Ansprüche 1 bis 3,
**dadurch gekennzeichnet, dass**
nach dem Tieflochbohren die Lenkverzahnung (115) erzeugt wird.

6. Lenkzahnstange (100) für ein Kraftfahrzeug, die einen Verzahnungsabschnitt (110) mit einer Lenkverzahnung (115) und einen Spindelabschnitt (120) mit einer Kugelumlaufspindel (125) aufweist und die mit einem Verfahren gemäß einem der vorausgehenden Ansprüche hergestellt ist, so dass trotz einstückiger Herstellung der Verzahnungsabschnitt (110) massiv und der Spindelabschnitt (120) hohl ausgebildet ist.

7. Lenkzahnstange (100) nach Anspruch 6,
**dadurch gekennzeichnet, dass**
der Spindelabschnitt (120) eine sich axial erstreckende tiefe Sacklochbohrung (130) aufweist, die wenigstens den Bereich durchragt, in dem sich die Kugelumlaufspindel (125) befindet.

8. Lenkzahnstange (100) nach Anspruch 7,
**dadurch gekennzeichnet, dass**
die Sacklochbohrung (130) bis zum Verzahnungsabschnitt (110) und insbesondere bis zu der Lenkverzahnung (115) heranreicht.

9. Lenkzahnstange (100) nach Anspruch 7 oder 8,
**dadurch gekennzeichnet, dass**
der Bohrungsdurchmesser (d) der Sacklochbohrung (130) im Wesentlichen der Hälfte eines Nenndurchmessers (D) der Lenkzahnstange (100) und/oder dem Gewindekernlochdurchmesser eines stirnseitigen Innengewindes (140) entspricht.

10. Lenkzahnstange (100) nach einem der vorausgehenden Ansprüche 5 bis 9,
**dadurch gekennzeichnet, dass**
diese aus einem Stahlmaterial und insbesondere aus einem gehärteten Stahlmaterial gebildet ist.

## Claims

1. A method for producing a steering gear rack (100), which has a tooth-set segment (110) having a steering tooth set (115) and a screw segment (120) having a recirculating ball screw (125), comprising:
Providing a rod-like blank composed of a solid metal material;
hollowing out the screw segment (120) by means of deep-hole drilling at one end, wherein a deep blind hole (130) extending axially through the screw segment (120) is produced; and
producing the recirculating ball screw (125) on the hollow screw segment (120) by means of machining.

2. A method according to Claim 1,
**characterized in that**
after the deep-hole drilling a curing of the metal material occurs.

3. A method according to Claim 1,
**characterized in that**
before the deep-hole drilling a curing of the metal material occurs.

4. A method according to any one of Claims 1 to 3,
**characterized in that**
before the deep-hole drilling the steering tooth set (115) is produced.

5. A method according to any one of Claims 1 to 3,
**characterized in that**
after the deep-hole drilling the steering tooth set (115) is produced.

6. A steering gear rack (100) for a motor vehicle, which has a tooth-set segment (110) with a steering tooth set (115) and a screw segment (120) having a recirculating ball screw (125) and which is produced with a method according to one of the preceding claims, so that despite the one-piece production, the tooth-set segment (110) is designed solid and the screw segment (120) is designed hollow.

7. A steering gear rack (100) according to Claim 6,
**characterized in that**
the screw segment (120) has a deep blind hole (130), which extends through at least the region, in which the recirculating ball screw (125) is located.

8. A steering gear rack (100) according to Claim 7,
**characterized in that**
the blind hole (130) extends as far as the tooth-set segment (110) and in particular as far as the steering tooth set (115).

9. A steering gear rack (100) according to Claim 7 or 8,
**characterized in that**
the bore diameter (d) of the blind hole (130) corresponds substantially to half a nominal diameter (D) of the steering gear rack (100) and/or the threaded core hole diameter of an end-face internal thread (140).

10. A steering gear rack (100) according to any one of the preceding Claims 5 to 9,
**characterized in that**
said steering gear rack is composed of a steel material and in particular of a cured steel material.

## Revendications

1. Procédé de fabrication d'une crémaillère de direction (100), qui comprend une portion dentée (110) avec une denture de direction (115) et une portion de broche (120) avec une vis à billes (125), comprenant :
la mise à disposition d'une ébauche en forme de tige constituée d'un matériau métallique massif ;
l'évidement de la portion de broche (120) par un perçage profond d'un seul côté, un alésage borgne (130) profond traversant axialement la portion de broche (120) étant réalisé ; et
la réalisation de la vis à billes (125) au niveau de la portion de broche (120) creuse par usinage avec formation de copeaux.

2. Procédé selon la revendication 1,
**caractérisé en ce que**
après le perçage profond, a lieu un durcissement du matériau métallique.

3. Procédé selon la revendication 1,
**caractérisé en ce que**
avant le perçage profond, a lieu un durcissement du matériau métallique.

4. Procédé selon l'une des revendications 1 à 3,
**caractérisé en ce que**
avant le perçage profond, la denture de direction (115) est réalisée.

5. Procédé selon l'une des revendications 1 à 3,
**caractérisé en ce que**
après le perçage profond, la denture de direction (115) est réalisée.

6. Crémaillère de direction (100) pour un véhicule à moteur, qui comprend une portion dentée (110) avec une denture de direction (115) et une portion de broche (120) avec une vis à billes (125) et qui est fabriquée à l'aide d'un procédé selon l'une des revendications précédentes, de façon à ce que, malgré une fabrication d'une seule pièce, la portion dentée (110) est massive et la portion de broche (120) est creuse.

7. Crémaillère de direction (100) selon la revendication 6,
**caractérisée en ce que**
la portion de broche (120) comprend un alésage borgne (130) profond d'étendant axialement qui traverse au moins la partie dans laquelle se trouve la vis à billes (125).

8. Crémaillère de direction (100) selon la revendication 7,
**caractérisée en ce que**
l'alésage borgne (130) arrive jusqu'à la portion dentée (110) et plus particulièrement jusqu'à la denture de direction (115).

9. Crémaillère de direction (100) selon la revendication 7 ou 8,
**caractérisée en ce que**
le diamètre (d) de l'alésage borgne (130) correspondant globalement à la moitié du diamètre nominal (D) de la crémaillère (100) et/ou au diamètre du trou du noyau de filet d'un filetage interne frontal (140).

10. Crémaillère de direction (100) selon l'une des revendications 5 à 9,
**caractérisée en ce que**
celle-ci est constituée d'un matériau de type acier et plus particulièrement d'un acir durci.
